# EUROPEAN PATENT APPLICATION

(11) **EP 4 808 204 A1**
(43) Date of publication of application: **16.09.2026**
(21) Application number: 24890341.1
(22) Date of filing: 24.09.2024
(51) Int. Cl.: H04W 28/12

(54) **DATA TRANSMISSION METHODS, COMMUNICATION APPARATUS AND STORAGE MEDIUM**

(30) Priority: 16.11.2023 CN 202311532181
(71) Applicant: ZTE Corporation, Shenzhen, Guangdong 518057 (CN)
(72) Inventor: WANG, Fei, Shenzhen, Guangdong 518057 (CN); XIE, Feng, Shenzhen, Guangdong 518057 (CN); LIU, Yu, Shenzhen, Guangdong 518057 (CN)
(74) Representative: Ziebig Hengelhaupt Intellectual Property Attorneys Patentanwaltskanzlei PartGmbB
(86) International application number: PCT/CN2024/120760
(87) International publication number: WO 2025/102983

(57) **Abstract**

The present disclosure provides data transmission methods, a communication apparatus and a storage medium. A data transmission method comprises: sending a first message to a second node, the first message being used for requesting transmission of a first type of data; receiving a second message sent by the second node and used for responding to the first message; and, on the basis of the second message, performing the transmission of the first type of data with the second node, wherein one of the first node and the second node is a transmission start point of the first type of data, and the other one of the first node and the second node is a transmission end point of the first type of data.

## Description

The present disclosure claims a priority to Chinese Patent Application No. 202311532181.8, and filed on November 16, 2023, the entire content of which is incorporated into the present application by reference.

### TECHNICAL FIELD

The present disclosure relates to the field of communication, and in particular, to a data transmission method, a communication apparatus, and a storage medium.

### BACKGROUND

With the rapid development of technologies, the demand for artificial intelligence (AI) technology in the field of wireless communication is growing increasingly; the development of future networks will move toward the direction of intelligence. Currently, the processing of data involved in some artificial intelligence technologies (for example, data generated and/or used by AI, sensing data, etc.) is mainly concentrated in a cloud, that is, data is uploaded to the cloud via intermediate nodes (for example, terminals and base stations) and is processed by the cloud.

### SUMMARY

In an aspect, a data transmission method is provided. The data transmission method is applied to a first node, and includes:
sending a first message to a second node, where the first message is used to request transmission of first type of data;
receiving a second message sent from the second node in response to the first message; and
performing transmission of the first type of data with the second node based on the second message; where one of the first node and the second node is a transmission starting point of the first type of data, and the other of the first node and the second node is a transmission termination point of the first type of data.

In another aspect, a data transmission method is provided. The data transmission method is applied to a second node, and includes:
receiving a first message sent from a first node, where the first message is used to request transmission of first type of data;
sending a second message to the first node in response to the first message;
performing transmission of the first type of data with the first node based on the second message; where one of the first node and the second node is a transmission starting point of the first type of data, and the other of the first node and the second node is a transmission termination point of the first type of data.

In yet another aspect, a data transmission method is provided. The data transmission method is applied to a first node, and includes:
sending a first message to a second node, where the first message is used to request transmission of first type of data;
receiving a second message sent from the second node in response to the first message, where the second message includes address information of a target node; and
performing transmission of the first type of data with the target node based on the address information of the target node; where one of the first node and the target node is a starting point of the transmission of the first type of data, and the other of the first node and the target node is a transmission termination point of the first type of data.

In yet another aspect, a data transmission method is provided. The data transmission method is applied to a second node, and includes:
receiving a first message sent from a first node, where the first message is used to request transmission of first type of data; and
sending a second message to the first node in response to the first message; where the second message includes address information of a target node; one of the first node and the target node is a transmission starting point of the first type of data, and the other of the first node and the target node is a transmission termination point of the first type of data.

In yet another aspect, a data transmission method is provided. The data transmission method is applied to a target node, and includes:
receiving a fourth message sent from a first node, where the fourth message is used to request establishment of a session for transmitting first type of data;
sending a fifth message to the first node, where the fifth message is used to indicate that establishment of the session is completed; and
performing transmission of the first type of data with the first node through the session; where one of the first node and the target node is a transmission starting point for the first type of data, and the other of the first node and the target node is a transmission termination point for the first type of data.

In yet another aspect, a data transmission apparatus is provided. The data transmission apparatus is applied to a first node, and includes:
a sending module, configured to send a first message to a second node, where the first message is used to request transmission of first type of data;
a receiving module, configured to receive a second message sent from the second node in response to the first message;
a transmitting module, configured to perform transmission of the first type of data with the second node based on the second message; where one of the first node and the second node is a transmission starting point of the first type of data, and the other of the first node and the second node is a transmission termination point of the first type of data.

In yet another aspect, a data transmission apparatus is provided. The data transmission apparatus is applied to a second node, and includes:
a receiving module, configured to receive a first message sent from a first node, where the first message is used to request transmission of first type of data;
a sending module, configured to send a second message to the first node in response to the first message;
a transmitting module, configured to perform transmission of the first type of data with the first node based on the second message; where one of the first node and the second node is a transmission starting point for the first type of data, and the other of the first node and the second node is a transmission termination point for the first type of data.

In yet another aspect, a data transmission apparatus is provided. The data transmission apparatus is applied to a first node, and includes:
a sending module, configured to send a first message to a second node, where the first message is used to request transmission of first type of data;
a receiving module, configured to receive a second message sent from the second node in response to the first message, where the second message includes address information of a target node; and
a transmitting module, configured to perform transmission of the first type of data with the target node based on the address information of the target node; where one of the first node and the target node is a starting point of the transmission of the first type of data, and the other of the first node and the target node is a transmission termination point of the first type of data.

In yet another aspect, a data transmission apparatus is provided. The data transmission apparatus is applied to a second node, and includes:
a receiving module, configured to receive a first message sent from a first node, where the first message is used to request transmission of first type of data;
a sending module, configured to send a second message to the first node in response to the first message; where the second message includes address information of a target node; where one of the first node and the target node is a transmission starting point of the first type of data, and the other of the first node and the target node is a transmission termination point of the first type of data.

In yet another aspect, a data transmission apparatus is provided. The data transmission apparatus is applied to a target node, and includes:
a receiving module, configured to receive a fourth message sent from a first node, where the fourth message is used to request establishment of a session for transmitting first type of data;
a sending module, configured to send a fifth message to the first node, where the fifth message is used to indicate that establishment of the session is completed; and
a transmitting module, configured to perform transmission of the first type of data with the first node through the session; where one of the first node and the target node is a transmission starting point for the first type of data, and the other of the first node and the target node is a transmission termination point for the first type of data.

In yet another aspect, a communication apparatus is provided. The communication apparatus includes: a processor and a memory for storing instructions executable by the processor; the processor is configured to execute the instructions, so that the communication apparatus implements the data transmission method described in any one of the above aspects.

In yet another aspect, a computer readable storage medium is provided. The computer readable storage medium stores computer instructions thereon, and the computer instructions, upon being executed on a computer, enable the computer to perform the data transmission method according to any one of the above aspects.

In yet another aspect, a computer program product is provided. The computer program product includes computer program instructions, and the computer program instructions, upon being executed by a processor, implement the data transmission method described in any one of the above aspects.

### BRIEF DESCRIPTION OF THE DRAWINGS

In order to illustrate technical solutions in the present disclosure more clearly, the drawings to be used in some embodiments of the present disclosure will be introduced briefly. Obviously, the drawings to be described below are merely drawings of some embodiments of the present disclosure, and those ordinary skilled in the art may also obtain other drawings according to these drawings.
FIG. 1 is a schematic diagram of an architecture of a communication system according to some embodiments of the present disclosure.
FIG. 2 is a diagram of a functional architecture of an AI air interface transmission model according to some embodiments of the present disclosure.
FIG. 3 is a data transmission diagram according to some embodiments of the present disclosure.
FIG. 4 is a flow chart of a data transmission method according to some embodiments of the present disclosure.
FIG. 5 is a flow chart of another data transmission method according to some embodiments of the present disclosure.
FIG. 6 is a schematic diagram of a protocol stack according to some embodiments of the present disclosure.
FIG. 7 is a schematic diagram of another protocol stack according to some embodiments of the present disclosure.
FIG. 8 is a schematic diagram of a user plane functional layer according to some embodiments of the present disclosure.
FIG. 9 is a schematic diagram of a control plane functional layer according to some embodiments of the present disclosure.
FIG. 10 is a schematic diagram of indication information according to some embodiments of the present disclosure.
FIG. 11 is a schematic diagram of another indication information according to some embodiments of the present disclosure.
FIG. 12 is a schematic diagram of a flexible protocol stack according to some embodiments of the present disclosure.
FIG. 13 is a flow chart of yet another data transmission method according to some embodiments of the present disclosure.
FIG. 14 is a flow chart of yet another data transmission method according to some embodiments of the present disclosure.
FIG. 15 is a flow chart of yet another data transmission method according to some embodiments of the present disclosure.
FIG. 16 is a flow chart of yet another data transmission method according to some embodiments of the present disclosure.
FIG. 17 is a flow chart of yet another data transmission method according to some embodiments of the present disclosure.
FIG. 18 is a flow chart of yet another data transmission method according to some embodiments of the present disclosure.
FIG. 19 is a structural schematic diagram of a data transmission apparatus according to some embodiments of the present disclosure.
FIG. 20 is a structural schematic diagram of another data transmission apparatus according to some embodiments of the present disclosure.
FIG. 21 is a structural schematic diagram of yet another data transmission apparatus according to some embodiments of the present disclosure.
FIG. 22 is a structural schematic diagram of yet another data transmission apparatus according to some embodiments of the present disclosure.
FIG. 23 is a structural schematic diagram of yet another data transmission apparatus according to some embodiments of the present disclosure.
FIG. 24 is a structural schematic diagram of yet another data transmission apparatus according to some embodiments of the present disclosure.

### DETAILED DESCRIPTION

In order to enable those skilled in the art to better understand technical solutions of the embodiments of the present disclosure, the technical solutions in the present disclosure will be described below clearly and completely with reference to the drawings. Obviously, the described embodiments are merely some but not all of the embodiments of the present disclosure. Based on the embodiments of the present disclosure, all other embodiments obtained by those ordinary skilled in the art without making inventive efforts fall within the scope of protection of the present disclosure.

It should be noted that, in the present disclosure, words such as "exemplarily" or "for example", etc., are used to represent an example, illustration, or explanation. Any embodiment or design solution described as "exemplarily" or "for example", etc., in the present disclosure should not be construed as preferred or advantageous over other embodiments or design solutions. Rather, the usage of words such as "exemplarily" or "for example", etc., is intended to present relevant concepts in a specific manner.

Hereinafter, the expressions "first", "second", etc., are used for descriptive purposes only, but are not to be construed as indicating or implying relative importance or implicitly indicating a number of indicated technical features. Thus, features defined with expressions "first" or "second", etc., may explicitly or implicitly include one or more such features.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more.

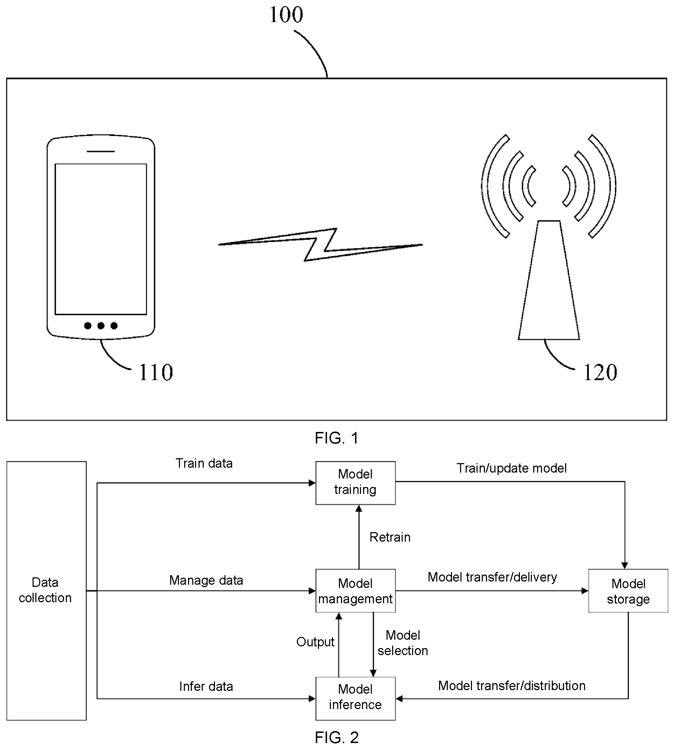

The method provided in the embodiments of the present disclosure may be applied to various communication systems. For example, the communication system may be a 5th generation (5G) communication system, a Wi-Fi system, a 3GPP (3rd Generation Partnership Project)-related communication system, a future evolved communication system (e.g., a 6th generation (6G) communication system, etc.), or a system integrating multiple systems, etc., which is not limited thereto. Take an example of a communication system 100 shown in FIG. 1 below, the method provided in the embodiments of the present disclosure is described. FIG. 1 is merely a schematic diagram and does not constitute a limitation on the applicable scenarios of the technical solutions provided in the present disclosure.

As shown in FIG. 1, the communication system 100 includes: a first node 110 and a second node 120; where the first node 110 is communicatively connected with the second node 120.

The first node 110 is used for communication, information acquisition, entertainment, and the like. In some embodiments, the first node 110 is used to send a first message (the first message is used to request transmission of first type of data) to the second node 120, receive a second message sent from the second node 120 in respond to the first message, and perform transmission of the first type of data with the second node 120 based on the second message.

In some embodiments, one of the first node 110 and the second node 120 is a transmission starting point for the first type of data, and the other of the first node 110 and the second node 120 is a transmission termination point for the first type of data.

In some embodiments, the communication system 100 further includes: a target node (not shown). The first node 110 is further used to send a fourth message (the fourth message is used to request establishment of a session for transmitting first type of data) to the target node, receive a fifth message sent from the target node for indicating completion of establishment of the session, and perform transmission of the first type of data with the target node.

The second node 120 is used for data exchange and communication. In some embodiments, the second node 120 is used to receive a first message sent from the first node 110, send a second message to the first node 110 in response to the first message, and perform transmission of the first type of data with the first node 110 based on the second message.

In some embodiments, one of the first node and the second node is a base station, and the other of the first node and the second node is a terminal. The terminal may be a user equipment (UE), such as a mobile phone, a tablet computer, a desktop computer, a laptop computer, a handheld computer, a notebook computer, an ultra-mobile personal computer (UMPC), a netbook as well as a cellular phone, etc. The first node 110 may also be an augmented reality (AR)/virtual reality (VR) device, etc. The base station may be a base station (gNB) adopting a centralized distributed architecture in a 5G system, or a base station in a 6G system.

In some embodiments, a wireless connection may be established between the first node 110 and the second node 120 via a radio air interface. In different implementations, the radio air interface is a radio air interface based on a 4G standard; or, the radio air interface is a radio air interface based on a 5G standard, for example, the radio air interface is a new radio; or, the radio air interface may also be a radio air interface complying with technical standards for next-generation mobile communication networks beyond 5G.

The target node is used to receive a fourth message (the fourth message is used to request establishment of a session for transmitting first type of data) sent from the first node 110, send a fifth message to the first node, and perform transmission of the first type of data with the first node through the session.

In some embodiments, the target node may be a base station or an operation administration and maintenance (OAM) device, and the embodiments of the present disclosure do not limit the form of the target node.

It should be noted that, the system architecture and application scenarios described in the embodiments of the present disclosure are intended to illustrate the technical solutions of the embodiments of the present disclosure more clearly, and do not limit the technical solutions provided in the embodiments of the present disclosure. Those ordinary skilled in the art can know that, with the evolution of the system architecture and the emergence of new traffic scenarios, the technical solutions provided in the embodiments of the present disclosure are also applicable to similar technical problems.

The future network will be an intelligent network. Currently, the processing of data involved in some artificial intelligence technologies (for example, data related to an AI air interface transmission model, sensing data, etc.) is mainly concentrated in the cloud, that is, data is uploaded to the cloud via a terminal (e.g., UE) and a base station (e.g., RAN), and processed by the cloud.

The above AI air interface transmission model is a model that utilizes artificial intelligence technologies to perform modeling, prediction and optimization of wireless communication channels. This model may analyze a large number of wireless channel data through deep learning algorithms, thereby improving the efficiency and performance of the wireless communication system. Through the AI air interface transmission model, wireless channels may be better understood and utilized, thereby improving the reliability and throughput of the communication system. In the wireless communication system, since the AI air interface transmission model usually needs to be stored and deployed in different locations, the transfer and delivery of the model are very important. In this case, the transfer of the model may involve a migration process from a server to an access network or a third party entity (such as an over-the-top (OTT) server). Through appropriate model transfer and delivery strategies, it can be ensured that the model may be effectively deployed and used as needed, thereby improving the performance and efficiency of the communication system. This also requires comprehensive consideration of factors such as network bandwidth, a delay, security, etc., to ensure the reliability and availability of the model. Exemplarily, as shown in FIG. 2, FIG. 2 is a functional architecture diagram of an AI air interface transmission model. The functional architecture includes modules such as a data collection, model training, model management, model inference, and model storage. In the functional architecture, after collecting the data involved in the AI air interface transmission model, the data may be trained, managed, and inferred, and then the model may be trained, managed and inferred, and finally the model may be stored.

However, for an AI use case specific to the air interface, a large amount of data generally needs to be processed in real time. If such massive data is required to be uploaded to the cloud for processing, a large amount of network bandwidth and resources will be occupied, leading to network congestion and increased delay; simultaneously, since the AI use case specific to the air interface has high real-time requirements for data processing, uploading data to the cloud for processing will cause round-trip transmission of data, thereby increasing the latency of data interaction. In summary, if the AI use case specific to the air interface uploads data to the cloud for processing, the overhead in the data transmission and processing process will be relatively large.

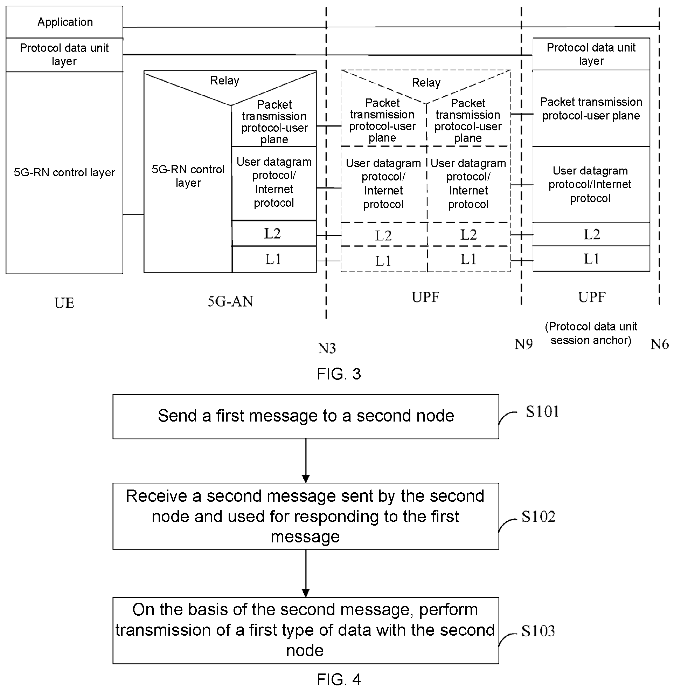

Therefore, if the terminal and the base station also have the functions of data transmission and processing (for example, data collection, model training, and model storage), that is, entities for data transmission and processing may be the terminal or the base station, the overhead in the data transmission and processing process will be reduced. Scenarios of the data transmission may include that: a terminal requests data (for example, data related to the AI air interface transmission model), and a base station sends a trained AI model to the terminal; or the terminal requests to send data (for example, data related to the AI air interface transmission model), and the terminal sends its own trained AI model to the base station; or the base station requests data (for example, data related to the AI air interface transmission model), and the terminal sends its own trained AI model to the base station; or the base station requests to send data (for example, data related to the AI air interface transmission model), and the base station sends its own trained AI air interface transmission model to the terminal. To implement the examples in the above scenarios, an access network architecture is required to possess certain capabilities. For example, a terminal and a base station are required to possess certain computing capability, storage capability, and data processing capability, where the data processing includes mapping of an AI air interface transmission model data file/flow -> a quality of service (QoS) flow -> a data radio bearer (DRB), or mapping of the AI air interface transmission model data file/flow -> a DRB and data fragmentation processing; and these new functions may be contained in functional entities of an existing air interface protocol stack, or may be implemented through new functional entities. In addition, the protocol stacks of the terminal and the base station are also required to support that a starting point and a termination point of data transmission are the terminal and the base station. However, in the current protocol stack, after data is sent from the terminal to the base station, the base station further sends the data to a user plane function (User Plane Function, UPF), so that the data is not only transmitted and processed between the terminal and the base station. Exemplarily, FIG. 3 is a transmission flowchart of data (for example, data related to the AI air interface transmission model). Based on FIG. 3, it can be seen that in the current protocol stack, after data is transmitted from the UE to a 5G access network (5G-AN), the transmission does not stop, but continues to be transmitted to the UPF.

For the above problem, reference may be made to FIG. 4. FIG. 4 is a flow chart of a data transmission method provided by in the embodiments of the present disclosure. As shown in FIG. 4, the data transmission method provided in the embodiments of the present disclosure is applied to a first node, and includes S101 to S103 as follows.

In S101, a first message is sent to a second node.

The first message is used to request transmission of first type of data.

In some embodiments, the first message includes at least one of: a size of data amount, or a data type. Exemplarily, the first message includes: the data amount of 1 MB, and the data type being the first-type.

In some embodiments, the data type also includes a second type, that is, other than the first type of data, there is second type of data. The second type of data is conventional communication data. Optionally, conventional communication data may be one or more of voice data, text data, image data, video data, and file data and the embodiments of the present disclosure do not limit the specific content of the second type of data.

It should be noted that, the contents included in the above first message are only some examples given by the embodiments of the present disclosure; during implementation, the contents included in the first message may vary according to actual situations, which are not limited to the embodiments of the present disclosure.

In some embodiments, the first message is indicated via at least one of a radio resource control (RRC) signaling, a medium access control control element (MAC CE), or downlink control information (DCI).

In some embodiments, the first type of data includes at least one of: data generated and/or used by artificial intelligence (AI), or sensing data.

It should be noted that, the types of the first type of data are only some examples given by the embodiments of the present disclosure; during actual implementation, the types of the first type of data may be more or fewer than those given in the above examples, and the embodiments of the present disclosure do not limit the types and contents of the first type of data.

In some embodiments, one of the first node and the second node is the base station, and the other of the first node and the second node is the terminal.

It can be understood that, when the first node needs to transmit first type of data with the second node, the first node sends a first message to the second node, so that the first node establishes a connection with the second node; simultaneously, one of the first node and the second node is the base station, and the other of the first node and the second node is the terminal, so that the first type of data may be transmitted between the base station and the terminal without being further uploaded to the cloud for processing, thereby avoiding occupation of network bandwidth and resources when the first type of data is uploaded to the cloud, and avoiding the problem of excessively long interaction latency caused by round-trip transmission when processing the first type of data, thus reducing overhead in the transmission and process of the first type of data.

In S102, a second message sent from the second node in response to the first message is received.

In some embodiments, the second node, after receiving the first message, generates a second message in response to the first message according to a content of the first message, and sends the second message to the first node, so that the first node determines, based on the second message, that the second node agrees to perform transmission of the first type of data.

In some embodiments, the second message is indicated via at least one of an RRC signaling, a MAC CE, or DCI.

It can be understood that, when the first node needs to transmit first type of data with the second node, the first node, after sending a first message to the second node, receives a second message from the second node in response to the first message, so as to implement an acknowledgment of transmitting the first type of data, so that the first node may perform subsequent operations based on the second message (that is, a feedback message of the second node), thereby ensuring the reliability of transmission of the first type of data.

In S103, transmission of first type of data is performed with the second node based on the second message.

In some embodiments, the above S103 may be implemented as: performing transmission of the first type of data with the second node via a radio bearer between the first node and the second node.

As an example, the second message includes configuration information of the radio bearer. When the first node receives the second message, the first node may establish a radio bearer with the second node based on the configuration information of the radio bearer, and performs transmission of the first type of data with the second node via the radio bearer. Once the radio bearer is established, one of the first node and the second node may be determined as the starting point for the transmission of the first type of data, and the other of the first node and the second node is the termination point for the transmission of the first type of data. That is, the first type of data will not be further transmitted to the cloud. In some embodiments, the above radio bearer is a radio bearer dedicated to first type of data, that is, the radio bearer is used to transmit first type of data.

In some embodiments, the above radio bearer is a data radio bearer (DRB) or a signaling radio bearer (SRB). According to the size of data amount of the first type of data, the radio bearer may be determined as the DRB or SRB. Exemplarily, in a case where the data amount of the first type of data is greater than a threshold value, the radio bearer is the DRB; or, in a case where the data amount of the first type of data is less than or equal to the threshold value, the radio bearer is the SRB. Optionally, the threshold value may be 10 MB.

As another example, before the first node sends the first message to the second node, the above method also includes: establishing a radio bearer with the second node. That is, when there is a need to transmit the first type of data between the first node and the second node, the first node may first establish a radio bearer with the second node, and then send the first message to the second node. The first node, after receiving the second message sent from the second node, performs transmission of the first type of data with the second node via the radio bearer.

It should be noted that, in the embodiments of the present disclosure, the radio bearer may be established either before the first node sends the first message or before the first node performs transmission of the first type of data with the second node. That is, establishment time of the radio bearer may depend on the requirements of data transmission between the first node and the second node and the embodiments of this disclosure do not limit the establishment time of the radio bearer, thereby improving the flexibility of establishment of the radio bearer.

In some embodiments, the radio bearer is configured to transmit first type of data between a first node and a second node, that is, one of the first node and the second node is the starting point for the transmission of the first type of data, and the other of the first node and the second node is the termination point for the transmission of the first type of data. Therefore, when the first node performs transmission of the first type of data to the second node via the radio bearer, the first type of data will only be transmitted between the first node and the second node, and will not flow to other nodes.

It can be understood that, based on the data transmission method provided by the embodiments of the present disclosure, when the first node needs to transmit the first type of data with the second node, the first node sends the first message to the second node, and receives the second message sent from the second node in response to the first message, so as to implement an acknowledgment for transmitting the first type of data, so that the first node may perform subsequent operations based on the second message (i.e., the feedback message of the second node), thereby ensuring the reliability of the transmission of the first type of data.

Meanwhile, in the method provided by the embodiments of the present disclosure, when the first node performs transmission of first type of data with the second node, one of the first node and the second node is a transmission starting point of the first type of data, and the other of the first node and the second node is a transmission termination point of the first type of data; the first type of data does not need to be further transmitted to a cloud for processing, but is only transmitted between the first node and the second node, thereby improving the efficiency of transmission and processing of the first type of data and reducing the overhead in the transmission and processing procedure of the first type of data.

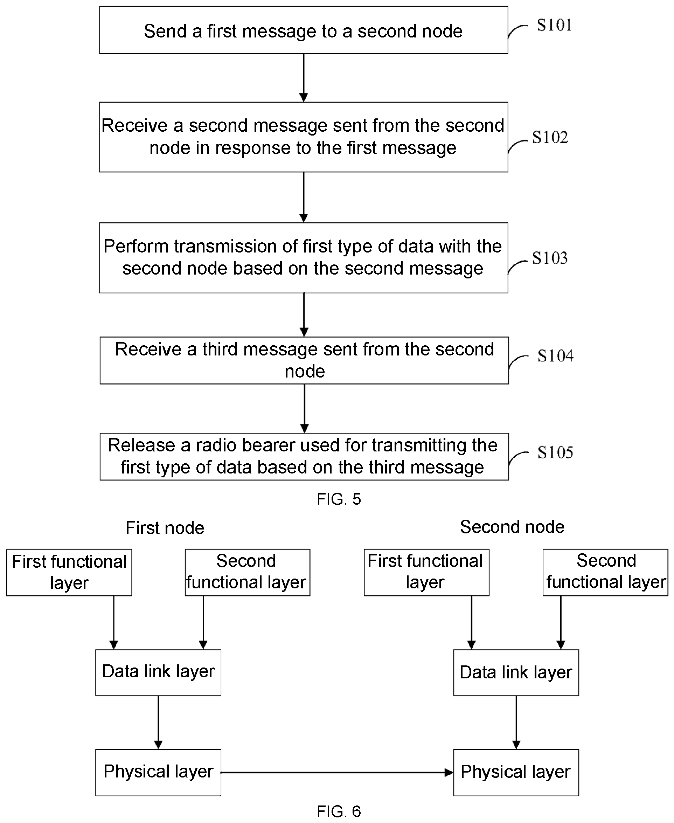

In some embodiments, as shown in FIG. 5, after performing the transmission of the first type of data with the second node, the above method further includes: S104-S105.

In S104, a third message sent from the second node is received.

In some embodiments, the third message is used to indicate that the transmission of the first type of data is completed. When the first node and the second node complete the transmission of the first type of data (for example, after the first node receives all the first type of data), the second node sends third information to the first node, so that the first node determines that the first type of data has been completely transmitted.

In some embodiments, the third message is indicated via at least one of an RRC signaling, a MAC CE, or DCI.

It can be understood that, in the method provided in the embodiments of the present disclosure, after the transmission of the first type of data is completed, the first node may receive the third message sent from the second node, so that the first node and the second node sense a transmission status of the first type of data in time.

In S105, a radio bearer used for transmitting the first type of data is released based on the third message.

As an example, when the first node receives the third message and determines that the first type of data has been completely transmitted, the first node may release the radio bearer used for transmitting the first type of data. As another example, when the first node is in an inactive state or idle state, the first node determines that the first type of data has been completely transmitted and may release the radio bearer.

It can be understood that, in the method provided in the embodiments of the present disclosure, a radio bearer is established between the first node and the second node, and transmission of the first type of data is performed based on the radio bearer, which ensures the transmission starting point and transmission termination point of the first type of data and avoids the problem that the first type of data will be further transmitted to the cloud and impose pressure on the cloud.

It should be noted that, in the above S103, the original protocol stacks of the first node and the second node are not modified. Instead, the transmission of the first type of data is performed between the first node and the second node based on the radio bearer. In actual operation, the original protocol stack of the first node and the second node may also be modified, so that the first type of data is transmitted between the first node and the second node.

As an implementation, a new functional layer may be added on top of the original protocol stack of the first node and the second node, that is, a new functional layer (for example, an AI protocol layer, a sensing protocol layer, etc.) is configured for the first type of data, so as to ensure that the first type of data is transmitted between the first node and the second node.

In some embodiments, as shown in FIG. 6, the protocol stacks of the first node and the second node includes a first functional layer for generating and/or processing the first type of data, a second functional layer for generating and/or processing second type of data, a physical layer shared by the first functional layer and the second functional layer, and a data link layer shared by the first functional layer and the second functional layer. The first functional layer is a new functional layer configured for the first type of data; and the second functional layer is a conventional functional layer in the original protocol stack.

It can be understood that, in the method provided in the embodiments of the present disclosure, by adding the new functional layer on top of the original protocol stack of the first node and the second node, the first type of data may be transmitted through the new functional layer, that is, the transmission of the first type of data between the first node and the second node is ensured.

As another implementation, in addition to adding the functional layer on top of the original protocol stack of the first node and the second node, an independent protocol stack may also be configured for the first type of data. For example, the application layer, the data link layer, and the physical layer used by the first type of data all adopt a new functional layer, which is completely independent from the original protocol stack, so that the first type of data is transmitted between the first node and the second node. Optionally, a part of the functions of the data link layer may adopt a new functional layer, and another part of the functions of the data link layer is shared with the functional layer of the original protocol stack; a part of the functions of the physical layer may adopt a new functional layer, and another part of the functions of the physical layer is shared with the functional layer of the original protocol stack.

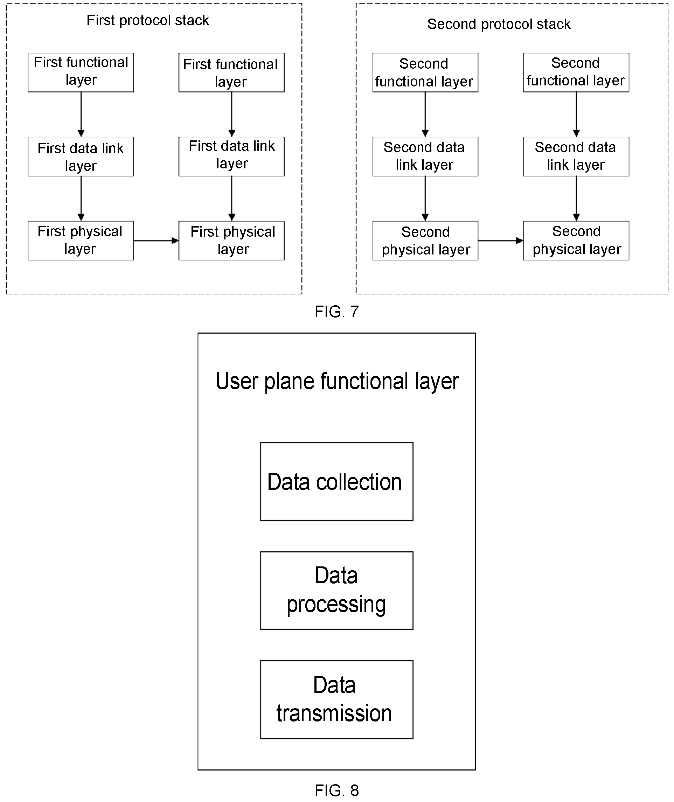

In some embodiments, as shown in FIG. 7, the first node and the second node possess a first protocol stack for the first type of data and a second protocol stack for the second type of data, the first protocol stack includes a first functional layer, a first data link layer and a first physical layer, and the second protocol stack includes a second functional layer, a second data link layer and a second physical layer; and the second type of data is conventional communication data. The first protocol stack is an independent protocol stack configured for the first type of data.

It can be understood that, in the embodiments of this disclosure, a first protocol stack is configured for the first type of data based on the difference between the first type of data and the second type of data, so that the first type of data is transmitted on the first protocol stack, ensuring that the transmission starting point and transmission end point of the first type of data are the first node and the second node.

As an example, the above first functional layer is a user plane functional layer. As shown in FIG. 8, the functions of the user plane functional layer include at least one of: data collection, data transmission, or data processing. At this time, the user plane functional layer is similar to an application layer in a conventional protocol stack.

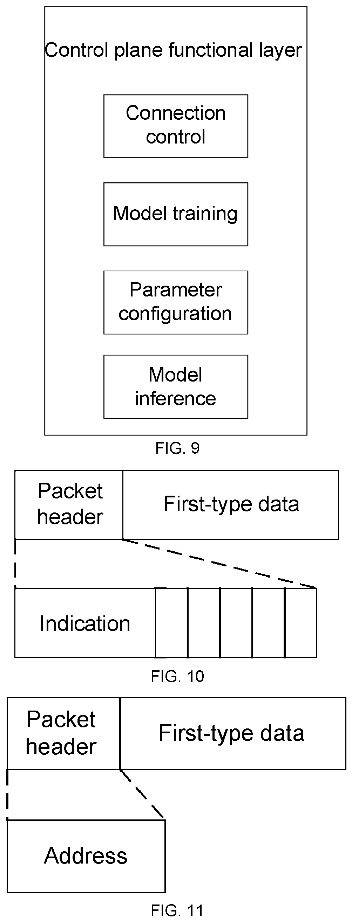

As another example, the above first functional layer is a control plane functional layer. As shown in FIG. 9, the functions of the control plane functional layer include at least one of: connection control, parameter configuration, model training, or model inference. At this time, the control plane functional layer is similar to an RRC function in the conventional protocol stack.

In some embodiments, a packet header of the first type of data includes indication information for indicating that the first type of data is transmitted to the first functional layer or the second functional layer. The indication information is indicated by at least one of a preset identifier or an address of a transmission termination point. As an example, as shown in FIG. 10, an N-bit indication may be added to the packet header of the indication information, to indicate that the first type of data is sent to the first functional layer or the second functional layer. In some embodiments, the value of N is related to a number of egresses of the data. For example, if the number of egresses is 2, then N is 1; if the number of egresses is 4, then N is 2. Exemplarily, taking an example of N being 1, when N is 1 and the indication is 1, it indicates that the first type of data is transmitted to the first functional layer; when N is 1 and the indication is 0, it indicates that the first type of data is transmitted to the second functional layer.

As another example, as shown in FIG. 11, an address may be added to the packet header of the indication information, to indicate that the first type of data is sent to the first functional layer or the second functional layer. Exemplarily, if the address of the packet header of the indication information is the address of the first functional layer, it indicates that the first type of data is sent to the first functional layer.

It can be understood that, in the method provided by the embodiments of the present disclosure, by adding indication information to the packet header of the first type of data, the second node may, after receiving the first type of data, determine a transmission path of the first type of data based on the indication information, thereby ensuring that the first type of data is transmitted between the first node and the second node.

In some embodiments, in addition to judging the transmission direction of the first type of data based on the indication information of the packet header of the first type of data, the transmission direction of the first type of data may also be determined based on the radio bearer between the first node and the second node. Exemplarily, if the radio bearer between the first node and the second node is the original radio bearer in the protocol stack, then the first type of data is sent to the second functional layer; if the radio bearer between the first node and the second node is a specific radio bearer based on the original conventional protocol stack (when configuring the special radio bearer, the protocol functional layer used by the specific radio bearer will also be configured, for example, the protocol functional layer used by the specific radio bearer includes the first functional layer), then the first type of data is sent to the first functional layer.

Based on the architecture of the above protocol stack, the starting point and the termination point of the transmission of the first type of data are the first functional layer. For example, the first type of data may be sent from the first node to the second node, and the second node determines a flow direction of the first type of data by parsing the indication information of the packet header of the first type of data. For another example, after the first functional layer of the first node generates the first type of data, it may send the generated first type of data to the second node according to event-triggered or periodically. Optionally, after the first functional layer generates the first type of data, the first type of data may be sent to the second node every 5 seconds.

As another implementation, in the method provided in the above embodiments of the present disclosure, the flow direction of the first type of data is fixed, for example, the first type of data is transmitted along a physical layer (PHY) -> medium access control (MAC)-> radio link control (RLC) -> packet data convergence protocol (PDCP) -> service data adaptation protocol (SDAP) -> UPF or along PHY -> MAC -> RLC -> PDCP -> SDAP -> AI. However, as the functions of the communication system become increasingly complex, the starting point and termination point of data transmission are more flexible and diverse, and the original protocol stack cannot satisfy the requirements for data transmission and processing. Therefore, a more flexible mapping may also be introduced into the architecture of the protocol stack, i.e., each protocol layer may flexibly determine an address of a next hop, such that the first type of data is transmitted between the first node and the second node. Optionally, more refined functional components may be used to replace the protocol layers, and the address of the next hop of the component is used to replace the address of the next hop of each protocol layer.

It can be understood that, in order to adapt to the functions of more complex communication systems, in the method provided in the embodiments of the present disclosure, a more flexible mapping is introduced into the architecture of the protocol stack, which allows each protocol layer to flexibly determine the address of the next hop, so as to flexibly determine the transmission starting point and transmission termination point of the first type of data.

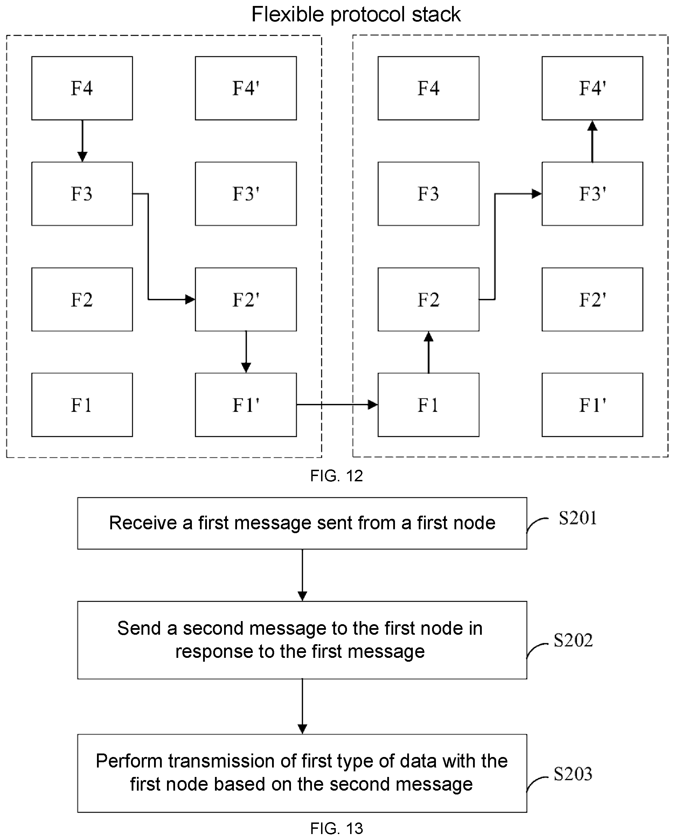

In some embodiments, the first type of data is transmitted via a radio bearer, and configuration information of the radio bearer includes indication information for indicating respective protocol layers used by the radio bearer. That is, the second information received by the first node includes the configuration information of the radio bearer; the first node may determine the transmission path of the first type of data based on the indication information of respective protocol layers used by the radio bearer. Exemplarily, as shown in FIG. 12, in the flexible protocol stack, the configuration information of the radio bearer indicates that the protocol layers used by the radio bearer are sequentially F4 -> F3 -> F2' -> F1', then when the first node and the second node perform transmission of the first type of data, the configuration information of the radio bearer is used for transmission of the first type of data.

As yet another implementation, the first type of data and the second type of data may share a same protocol stack, that is, no new functional layers are added to the original protocol stack, and no new protocol stacks are configured for the first type of data. At this time, the protocol stacks of the first node and the second node possess a third functional layer, a third physical layer, and a third data link layer for generating and/or processing the first type of data and the second type data.

Referring to FIG. 13, FIG. 13 is a flow chart of a data transmission method provided in the embodiments of the present disclosure. As shown in FIG. 13, the data transmission method provided in the embodiments of the present disclosure is applied to a second node, and may be implemented as S201 to S203 as follows.

In S201, a first message sent from a first node is received.

In some embodiments, the first message is used to request transmission of first type of data.

In some embodiments, before receiving the first message sent from the first node, the method further includes: establishing a radio bearer with the first node.

In S202, a second message is sent to the first node in response to the first message.

In S203, transmission of first type of data is performed with the first node based on the second message.

In some embodiments, one of the first node and the second node is the transmission starting point of the first type of data, and the other of the first node and the second node is the transmission termination point of the first type of data.

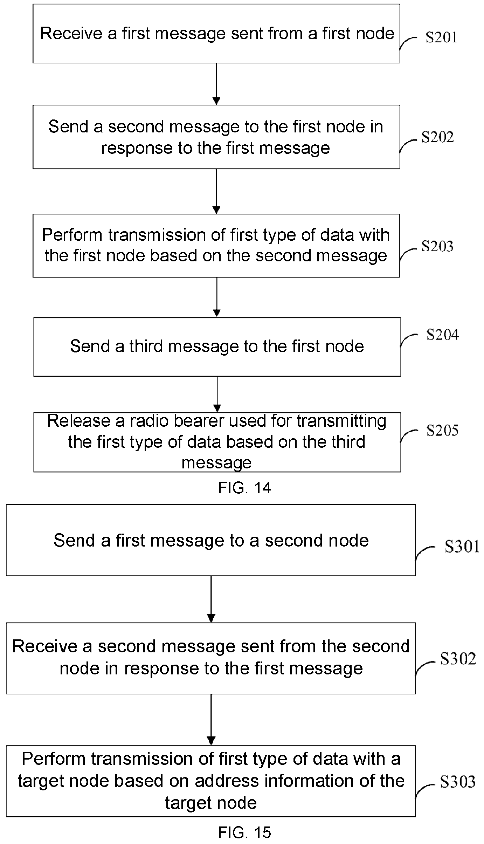

In some embodiments, as shown in FIG. 14, after performing transmission of first type of data with the first node based on the second message, the above method further includes: S204 to S205.

In S204, a third message is sent to the first node.

In some embodiments, the third message is used to indicate that the transmission of the first type of data is completed.

In S205, a radio bearer used for transmitting the first type of data is released based on the third message.

In some embodiments, for the implementations of S201 to S204, references may be made to the above S101 to S105, which will not be repeated in the embodiments of the present disclosure.

It can be understood that, based on the data transmission method provided in the embodiments of the present disclosure, the second node, after receiving the first message sent from the first node, sends a second message to the first node in response to the first message, so as to implement an acknowledgment of transmitting the first type of data, which may enable the first node to perform subsequent operations based on the second message (i.e., the feedback message of the second node), thereby ensuring the reliability of the transmission of the first type of data.

Meanwhile, in the method provided in the embodiments of the present disclosure, when the second node and the first node perform transmission of the first type of data, one of the first node and the second node is the transmission starting point of the first type of data, and the other of the first node and the second node is the transmission termination point of the first type of data, such that the first type of data is transmitted only between the first node and the second node, i.e., the first type of data does not need to be further uploaded to the cloud for processing, which avoids the occupation of network bandwidth and resources when the first type of data is uploaded to the cloud, and avoids the problem of excessively long interaction latency caused by round-trip transmission when processing the first type of data, thereby reducing the overhead in the transmission and processing procedure of the first type of data.

The above disclosed embodiments mainly introduce examples in which the first type of data is transmitted between the first node and the second node, but in actual implementation, the first type of data may not be limited to being transmitted between the first node and the second node, and the transmission starting point and the transmission termination point of the first type of data may be flexibly determined according to different actual situations.

For the above problem, referring to FIG. 15, FIG. 15 is a flow chart of a data transmission method provided in the embodiments of the present disclosure. As shown in FIG. 15, the data transmission method provided by the embodiments of the present disclosure is applied to a first node, and may be implemented as S301 to S303 as follows.

In S301, a first message is sent to a second node.

In some embodiments, the first message is used to request transmission of first type of data.

In S302, a second message sent from the second node in response to the first message is received.

In some embodiments, the second message includes address information of a target node. That is, after the first node sends the first message to the second node, the second node may match a suitable target node for the first node based on the content of the first message, such as the size of data amount of the first type of data, etc., and put the address of the target node into the second message, and send the second message to the first node.

In some embodiments, the first node and the second node are two different nodes of a terminal, a radio access network (RAN) network element, a core network (CN) network element, and a server. Exemplarily, the first node may be the terminal, the second node may be the CN network element, and when the terminal needs to transmit data with the CN network element, the terminal sends a first message to the CN, and receives a second message sent from the CN network element in response to the first message, so as to perform acknowledgment before data transmission.

In some embodiments, the target node is the second node; or, the target node is another node different from the second node. Exemplarily, the second message includes address information of the second node, or the second message includes address information of another node different from the second node.

In some embodiments, the target node is any one of the terminals, the RAN network element, the CN network element, and the server, and a node type of the target node is different from a node type of the first node. Exemplarily, the first node may be the RAN network element, and the target node may be the CN network element.

In some embodiments, for the implementations of S301 to S302, references may be made to the above S101 to S102, which will not be repeated in the embodiments of the present disclosure.

It can be understood that, based on the data transmission method provided by the embodiments of the present disclosure, when the first node needs to transmit the first type of data, the first node sends the first message to the second node, and receives the second message sent from the second node in response to the first message, so as to implement an acknowledgment for transmitting the first type of data, so that the first node may perform subsequent operations based on the second message (i.e., the feedback message of the second node), thereby ensuring the reliability of the transmission of the first type of data. Meanwhile, with the complication of the functions of the communication system, the transmission starting point and the transmission termination point of data also become more variable. In the method provided by the embodiments of the present disclosure, the target node is the second node; alternatively, the target node is another node different from the second node, which makes the types of the target node more diverse, and also makes the transmission starting point and the transmission termination point of the first type of data more flexible, so as to adapt to the functions of more complex communication systems.

In S303, transmission of first type of data is performed with the target node based on address information of the target node.

In some embodiments, one of the first node and the target node is the transmission starting point of the first type of data, and the other of the first node and the target node is the transmission termination point of the first type of data. Exemplarily, the first node, as the transmission starting point of the first type of data, sends the first type of data to the target node based on the address information of the target node.

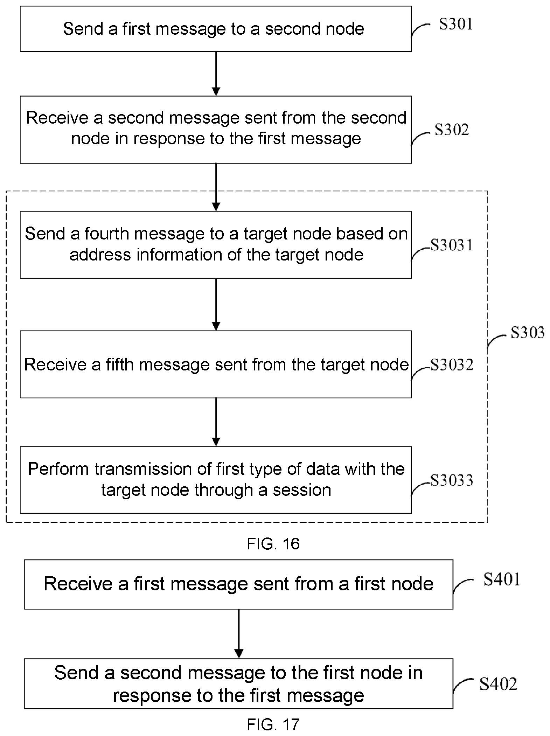

In some embodiments, as shown in FIG. 16, the above S303 may be implemented as: S3031 to S3033.

In S3031, a fourth message is sent to the target node based on the address information of the target node.

In some embodiments, the fourth message is used to request establishment of a session for transmitting first type of data. That is, when the first node needs to perform transmission of the first type of data with the target node, the first node sends a fourth message to the target node, so that the target node responds to the fourth message.

In some embodiments, the fourth message is indicated via at least one of an RRC signaling, a MAC CE, or DCI.

In S3032, a fifth message sent from the target node is received.

In some embodiments, the fifth message is used to represent that the establishment of the session is completed. That is, after the first node receives the fifth message sent from the target node, the first node may determine that establishment of the session between the first node and the target node is completed at this time, and the first node may perform transmission of the first type of data with the target node based on the session.

In some embodiments, the fifth message is indicated via at least one of an RRC signaling, a MAC CE, or DCI.

In S3033, transmission of the first type of data is performed with the target node through the session.

It can be understood that, in the method provided in the embodiments of the present disclosure, the first node may acquire the address information of the target node from the second node, and perform transmission of the first type of data with the target node based on the address information of the target node, which may make the transmission starting point and transmission end point of the transmission of the first type of data more diverse. Furthermore, one of the first node and the target node is the transmission starting point of the first type of data, and the other of the first node and the target node is a transmission termination point of the first type of data, and the first type of data is only transmitted and processed between the first node and the target node, that is, the first type of data does not need to be further uploaded to a cloud for processing, avoiding occupation of network bandwidth and resources when the first type of data is uploaded to the cloud, and avoiding a problem of an excessively long interaction delay caused by round-trip transmission when the first type of data is processed, reducing the overhead in the procedure of transmission and processing of the first type of data.

Referring to FIG. 17, FIG. 17 is a flow chart of a data transmission method provided in the embodiments of the present disclosure. As shown in FIG. 17, the data transmission method provided in the embodiments of the present disclosure is applied to a second node, and may be implemented as S401 to S402 as follows.

In S401, a first message sent from a first node is received.

In some embodiments, the first message is used to request transmission of first type of data.

In S402, a second message is sent to the first node in response to the first message.

In some embodiments, the second message includes the address information of the target node; where one of the first node and the target node is the transmission starting point of the first type of data, and the other of the first node and the target node is the transmission termination point of the first type of data.

In some embodiments, for the implementations of S401 to S402, reference may be made to the implementations of S201 to S202, which will not be repeated in the embodiments of the present disclosure.

It can be understood that, based on the data transmission method provided in the embodiments of the present disclosure, the second node, after receiving the first message sent from the first node, sends a second message to the first node in response to the first message, so as to implement an acknowledgment of transmitting the first type of data, which may enable the first node to perform subsequent operations based on the second message (i.e., the feedback message of the second node), thereby ensuring the reliability of the transmission of the first type of data.

Simultaneously, the second message includes address information of the target node, so that the first node may perform transmission of the first type of data with the target node, making the transmission starting point and the transmission termination point of transmission of the first type of data more diverse. Furthermore, one of the first node and the target node is the transmission starting point of the first type of data, and the other of the first node and the target node is the transmission termination point of the first type of data, ensuring that the first type of data is only transmitted and processed between the first node and the target node, that is, the first type of data does not need to be further uploaded to a cloud for processing, avoiding occupation of network bandwidth and resources when the first type of data is uploaded to the cloud, and avoiding a problem of an excessively long interaction delay caused by round-trip transmission when the first type of data is processed, reducing the overhead in the procedure of transmission and processing of the first type of data.

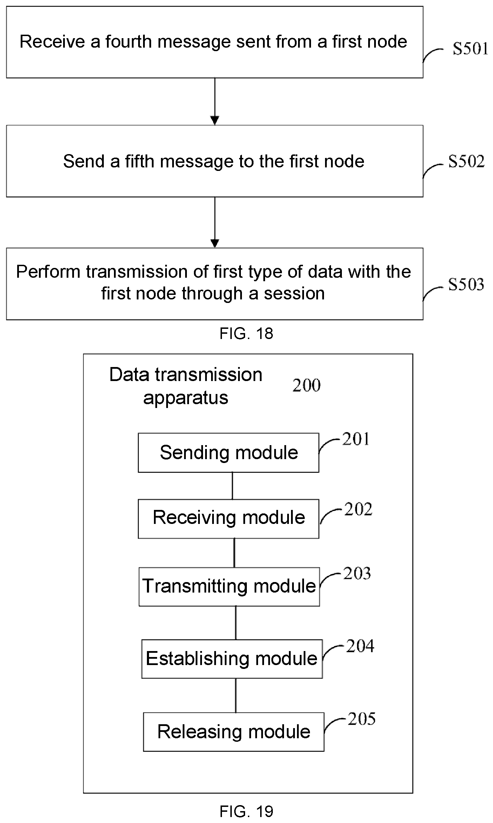

Referring to FIG. 18, FIG. 18 is a flow chart of a data transmission method provided in the embodiments of the present disclosure. As shown in FIG. 18, the data transmission method provided in the embodiments of the present disclosure is applied to a target node, and may be implemented as S501 to S503 as follows.

In S501, a fourth message sent from a first node is received.

In some embodiments, the fourth message is used to request establishment of a session for transmitting first type of data.

In S502, a fifth message is sent to the first node.

In some embodiments, the fifth message is used to represent that the establishment of the session is completed.

In S503, transmission of the first type of data is performed with the first node through the session.

In some embodiments, one of the first node and the target node is the transmission starting point of the first type of data, and the other of the first node and the target node is the transmission termination point of the first type of data.

In some embodiments, for the implementations of S501 to S503, reference may be made to the implementations of S301 to S302, which will not be repeated in the embodiments of the present disclosure.

It can be understood that, based on the data transmission method provided in the embodiments of the present disclosure, the target node, after receiving the fourth message sent from the first node (the fourth message is used to request establishment of the session for transmitting first type of data), sends the fifth message to the first node (the fifth message is used to indicate that the establishment of the session is completed), to implement acknowledgment of transmitting the first type of data and implement establishment of the session for transmitting the first type of data, so that the first node may perform subsequent operations based on the fifth message, ensuring reliability of the transmission of the first type of data.

Simultaneously, one of the first node and the target node is the transmission starting point of the first type of data, and the other of the first node and the target node is the transmission termination point of the first type of data, ensuring that the first type of data is only transmitted and processed between the first node and the target node, that is, the first type of data does not need to be further uploaded to a cloud and processed by the cloud, avoiding occupation of network bandwidth and resources when the first type of data is uploaded to the cloud, and avoiding a problem of an excessively long interaction delay caused by round-trip transmission when the first type of data is processed, reducing the overhead in the procedure of transmission and processing of the first type of data.

The above introduces the solutions of the embodiments of the present disclosure mainly from the perspective of the method. It can be understood that, in order to implement the above functions, a data transmission apparatus contains at least one of hardware structures or software modules for performing various functions. Those skilled in the art should easily realize that, in conjunction with the units and algorithm steps of various examples described in the embodiments disclosed herein, the embodiments of the present disclosure may be implemented in the form of hardware or a combination of hardware and computer software. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the embodiments of the present disclosure.

In the embodiments of the present disclosure, the data transmission apparatus may be divided into functional modules according to the foregoing method embodiments, for example, may be divided in a way that each functional module corresponds to each function, or two or more functions are integrated into one functional module. The above integrated module is implemented in the form of hardware or in the form of software. It should be noted that the division of the modules in embodiments of the present disclosure is schematic, which is only a logical functional division, and there may be other divisions for in actual implementations. The example in which each functional module is divided corresponding to each function, is taken for explanation below.

FIG. 19 is a structural schematic diagram of a data transmission apparatus provided in the embodiments of the present disclosure. The data transmission apparatus is applied to a first node and may perform the data transmission method provided in the above method embodiments. As shown in FIG. 19, the data transmission apparatus 200 includes: a sending module 201, a receiving module 202, and a transmitting module 203; and in some embodiments, the data transmission apparatus 200 further includes: an establishing module 204 and a releasing module 205;
the sending module 201, is configured to send a first message to a second node, where the first message is used to request transmission of first type of data;
the receiving module 202, is configured to receive a second message sent from the second node in response to the first message;
the transmitting module 203, is configured to perform transmission of the first type of data with the second node based on the second message; where one of the first node and the second node is a transmission starting point of the first type of data, and the other of the first node and the second node is a transmission termination point of the first type of data.

In some embodiments, one of the first node and the second node is a base station, and the other is a terminal.

In some embodiments, the first type of data includes at least one of: data generated and/or used by artificial intelligence (AI), or sensing data.

In some embodiments, the first message includes at least one of: a size of data amount or a data type.

In some embodiments, the first message is indicated via at least one of a radio resource control (RRC) signaling, a medium access control control element (MAC CE), or downlink control information (DCI).

In some embodiments, the second message is indicated via at least one of an RRC signaling, an MAC CE, or DCI.

In some embodiments, the transmitting module 203, is configured to perform transmission of the first type of data with the second node via a radio bearer between the first node and the second node.

In some embodiments, the radio bearer is a data radio bearer (DRB) or a signaling radio bearer (SRB).

In some embodiments, in a case where a data amount of the first type of data is greater than a threshold value, the radio bearer is a DRB; or in a case where a data amount of the first type of data is less than or equal to the threshold value, the radio bearer is an SRB.

In some embodiments, the establishing module 204, is configured to establish a radio bearer with the second node.

In some embodiments, the second message includes configuration information of the radio bearer.

In some embodiments, protocol stacks of the first node and the second node include a first functional layer for generating and/or processing the first type of data, a second functional layer for generating and/or processing second type of data, a physical layer shared by the first functional layer and the second functional layer, and a data link layer shared by the first functional layer and the second functional layer; and the second type of data is conventional communication data.

In some embodiments, the first node and the second node possess a first protocol stack for the first type of data and a second protocol stack for second type of data, the first protocol stack includes a first functional layer, a first data link layer and a first physical layer, and the second protocol stack includes a second functional layer, a second data link layer and a second physical layer; and the second type of data is conventional communication data.

In some embodiments, the first functional layer is a control plane functional layer; a function of the control plane functional layer includes at least one of: connection control, parameter configuration, model training, or model inference.

In some embodiments, a packet header of the first type of data includes indication information for indicating that the first type of data is transmitted to the first functional layer or the second functional layer; and the indication information is indicated by at least one of a preset identifier or an address of the transmission termination point.

In some embodiments, the first type of data is transmitted via a radio bearer, and configuration information of the radio bearer includes indication information for indicating respective protocol layers used by the radio bearer.

In some embodiments, protocol stacks of the first node and the second node possess a third functional layer, a third physical layer, and a third data link layer for generating and/or processing the first type of data and the second type of data; and the second type of data is conventional communication data.

In some embodiments, the receiving module 202, is further configured to receive a third message sent from the second node, where the third message is used to indicate that transmission of the first type of data is completed.

In some embodiments, the releasing module 205, is configured to release the radio bearer for transmitting first type of data based on the third message.

In some embodiments, the third message is indicated via at least one of an RRC signaling, a MAC CE, or DCI.

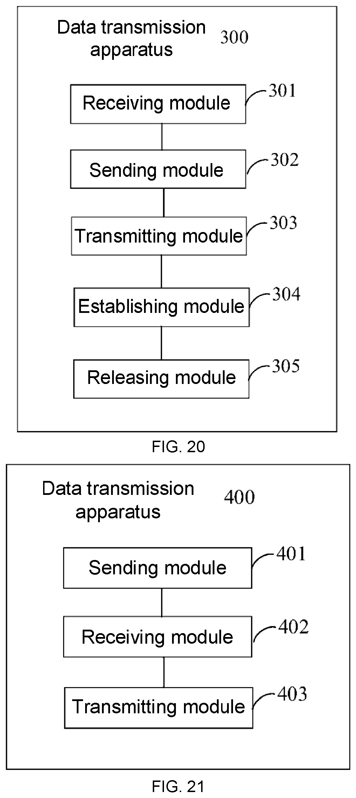

FIG. 20 is a structural schematic diagram of a data transmission apparatus provided in the embodiments of the present disclosure. The data transmission apparatus is applied to a second node and may perform the data transmission method provided in the above method embodiments. As shown in FIG. 20, a data transmission apparatus 300 includes: a receiving module 301, a sending module 302, a transmitting module 303, an establishing module 304, and a releasing module 305;
the receiving module 301, is configured to receive a first message sent from a first node, where the first message is used to request transmission of first type of data;
the sending module 302, is configured to send a second message to the first node in response to the first message;
the transmitting module 303, is configured to perform transmission of the first type of data with the first node based on the second message; where one of the first node and the second node is a transmission starting point for the first type of data, and the other of the first node and the second node is a transmission termination point for the first type of data.

In some embodiments, one of the first node and the second node is a base station, and the other is a terminal.

In some embodiments, the first type of data includes at least one of: data generated and/or used by AI, and sensing data.

In some embodiments, the first message includes at least one of: a size of data amount or a data type.

In some embodiments, the first message is indicated via at least one of an RRC signaling, a MAC CE, or DCI.

In some embodiments, the second message is indicated via at least one of an RRC signaling, a MAC CE, or DCI.

In some embodiments, the transmitting module 303, is configured to perform transmission of the first type of data with the second node via a radio bearer between the first node and the second node.

In some embodiments, the radio bearer is a dedicated radio bearer for the first type of data.

In some embodiments, the radio bearer is a DRB or an SRB.

In some embodiments, in a case where a data amount of the first type of data is greater than a threshold value, the radio bearer is a DRB; or in a case where a data amount of the first type of data is less than or equal to the threshold value, the radio bearer is an SRB.

In some embodiments, the establishing module 304, is configured to establish a radio bearer with the first node.

In some embodiments, the second message includes configuration information of the radio bearer.

In some embodiments, protocol stacks of the first node and the second node include a first functional layer for generating and/or processing the first type of data, a second functional layer for generating and/or processing second type of data, a physical layer shared by the first functional layer and the second functional layer, and a data link layer shared by the first functional layer and the second functional layer; and the second type of data is conventional communication data.

In some embodiments, the first node and the second node possess a first protocol stack for the first type of data and a second protocol stack for second type of data, the first protocol stack includes a first functional layer, a first data link layer and a first physical layer, and the second protocol stack includes a second functional layer, a second data link layer and a second physical layer; and the second type of data is conventional communication data.

In some embodiments, the first functional layer is a user plane functional layer; a function of the user plane functional layer includes at least one of: data collection, data transmission, or data processing.

In some embodiments, the first functional layer is a control plane functional layer; a function of the control plane functional layer includes at least one of: connection control, parameter configuration, model training, or model inference.

In some embodiments, a packet header of the first type of data includes indication information for indicating that the first type of data is transmitted to the first functional layer or the second functional layer; and the indication information is indicated by at least one of a preset identifier or an address of the transmission termination point.

In some embodiments, the first type of data is transmitted via a radio bearer, and configuration information of the radio bearer includes indication information for indicating respective protocol layers used by the radio bearer.

In some embodiments, protocol stacks of the first node and the second node possess a third functional layer, a third physical layer, and a third data link layer for generating and/or processing the first type of data and the second type of data; and the second type of data is conventional communication data.

In some embodiments, the sending module 302, is further configured to send a third message to the first node, where the third message is used to indicate that the transmission of the first type of data is completed.

In some embodiments, the releasing module 305, is configured to release the radio bearer for transmitting first type of data based on the third message.

In some embodiments, the third message is indicated via at least one of an RRC signaling, a MAC CE, or DCI.

FIG. 21 is a structural schematic diagram of a data transmission apparatus provided in the embodiments of the present disclosure. The data transmission apparatus is applied to a first node and may perform the data transmission method provided in the above method embodiments. As shown in FIG. 21, a data transmission apparatus 400 includes: a sending module 401, a receiving module 402, and a transmitting module 403;
the sending module 401, is configured to send a first message to a second node, where the first message is used to request transmission of first type of data;
the receiving module 402, is configured to receive a second message sent from the second node in response to the first message, where the second message includes address information of a target node; and
the transmitting module 403, is configured to perform transmission of the first type of data with the target node based on the address information of the target node; where one of the first node and the target node is a starting point of the transmission of the first type of data, and the other of the first node and the target node is a transmission termination point of the first type of data.

In some embodiments, the first node and the second node are two different nodes of a terminal, a RAN network element, a CN network element, and a server.

In some embodiments, the target node is any one of a terminal, a RAN network element, a CN network element, and a server; and a node type of the target node is different from a node type of the first node.

In some embodiments, the target node is the second node; or the target node is another node different from the second node.

In some embodiments, the transmitting module 403, is configured to send a fourth message to the target node based on the address information of the target node, where the fourth message is used to request establishment of a session for transmitting the first type of data; receive a fifth message sent from the target node, where the fifth message is used to represent that establishment of the session is completed; and perform transmission of the first type of data with the target node through the session.

In some embodiments, the first type of data includes at least one of: data generated and/or used by AI, or sensing data.

In some embodiments, the first message is indicated via at least one of an RRC signaling, a MAC CE, or DCI.

In some embodiments, the second message is indicated via at least one of an RRC signaling, a MAC CE, or DCI.

In some embodiments, the fourth message is indicated via at least one of an RRC signaling, a MAC CE, or DCI.

In some embodiments, the fifth message is indicated via at least one of an RRC signaling, a MAC CE, or DCI.

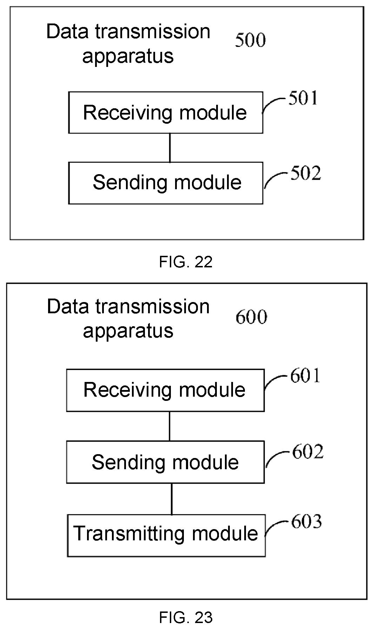

FIG. 22 is a structural schematic diagram of a data transmission apparatus provided in the embodiments of the present disclosure. The data transmission apparatus is applied to a second node and may perform the data transmission method provided in the above method embodiments. As shown in FIG. 22, a data transmission apparatus 500 includes: a receiving module 501 and a sending module 502;
the receiving module 501, is configured to receive a first message sent from a first node, where the first message is used to request transmission of first type of data; and
the sending module 502, is configured to send a second message to the first node in response to the first message; where the second message includes address information of a target node; where one of the first node and the target node is a transmission starting point of the first type of data, and the other of the first node and the target node is a transmission termination point of the first type of data.

In some embodiments, the first node and the second node are two different nodes of a terminal, a RAN network element, a CN network element, and a server.

In some embodiments, the target node is any one of a terminal, a RAN network element, a CN network element, and a server; and a node type of the target node is different from a node type of the first node.

In some embodiments, the first message includes at least one of: a size of data amount or a data type.

In some embodiments, the first message is indicated via at least one of an RRC signaling, a MAC CE, or DCI.

In some embodiments, the second message is indicated via at least one of an RRC signaling, a MAC CE, or DCI.

FIG. 23 is a structural schematic diagram of a data transmission apparatus provided in the embodiments of the present disclosure. The data transmission apparatus is applied to a target node and may perform the data transmission method provided in the above method embodiments. As shown in FIG. 23, a data transmission apparatus 600 includes: a receiving module 601, a sending module 602, and a transmitting module 603;
the receiving module 601, is configured to receive a fourth message sent from a first node, where the fourth message is used to request establishment of a session for transmitting first type of data;
the sending module 602, is configured to send a fifth message to the first node, where the fifth message is used to indicate that establishment of the session is completed; and
the transmitting module 603, is configured to perform transmission of the first type of data with the first node through the session; where one of the first node and the target node is a transmission starting point for the first type of data, and the other of the first node and the target node is a transmission termination point for the first type of data.

In some embodiments, the first node and the second node are two different nodes of a terminal, a RAN network element, a CN network element, and a server.

In some embodiments, the target node is any one of a terminal, a RAN network element, a CN network element, and a server; and a node type of the target node is different from a node type of the first node.

In some embodiments, the first type of data includes at least one of: data generated and/or used by AI, or sensing data.

In some embodiments, the fourth message is indicated via at least one of an RRC signaling, a MAC CE, or DCI.

In some embodiments, the fifth message is indicated via at least one of an RRC signaling, a MAC CE, or DCI.

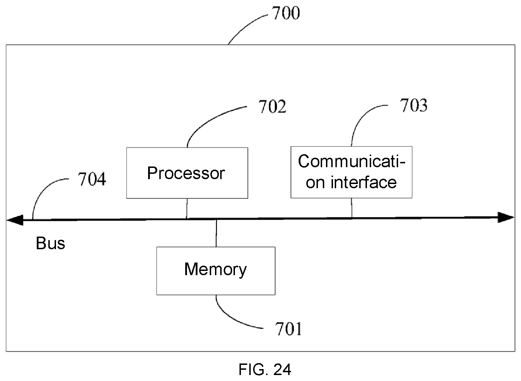

In a case where the functions of the above integrated modules are implemented in the form of hardware, the embodiments of the present disclosure provide a structure of the data transmission apparatus involved in the above embodiments. As shown in FIG. 24, the data transmission apparatus 700 includes a memory 701, a processor 702, a communication interface 703 and a bus 704.

The memory 701 may be, but not limited to, a read-only memory (ROM) or other types of static storage devices capable of storing static information and instructions, a random access memory (RAM) or other types of dynamic storage devices capable of storing dynamic information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

The processor 702 may be modules and circuits that implement or perform various exemplary logical blocks described in conjunction with the embodiments of the present disclosure. The processor 702 may be a central processing unit, a general-purpose processor, a digital signal processor, an application specific integrated circuit, a field programmable gate array or other programmable logic devices, a transistor logic device, a hardware component or any combination thereof. The processor 702 may implement or perform various exemplary logical blocks, modules and circuits described in conjunction with the embodiments of the present disclosure. The processor 702 may also be a combination that implements computing functions, for example, containing a combination of one or more microprocessors, a combination of a digital signal processor (DSP) and a microprocessor, or the like.

The communication interface 703 is configured to connect with other devices via a communication network. The communication network may be an Ethernet, a radio access network, a wireless local area network (WLAN), or the like.

As an implementation, the memory 701 may exist independently of the processor 702, and the memory 701 may be connected to the processor 702 through the bus 704, for storing instructions or program codes. When calling and executing the instructions or the program codes stored in the memory 701, the processor 702 is capable of implementing the data transmission method provided in the embodiments of the present disclosure.

As another implementation, the memory 701 may be integrated with the processor 702.

The bus 704 may be an extended industry standard architecture (EISA) bus or the like. The bus 704 may be classified into an address bus, a data bus, and a control bus, or the like. For ease of representation, only one bold line is used for representing the bus 704 in FIG. 24, but it does not mean that there is only one bus or one type of the bus.

Some embodiments of the present disclosure provide a computer readable storage medium (e.g., a non-transitory computer readable storage medium), and the computer readable storage medium has stored computer program instructions therein, and the computer program instructions, upon being executed on a computer, enable the computer to perform the data transmission method as described in any embodiment of the above-mentioned embodiments.

Exemplarily, the above-mentioned computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage medium described in the present disclosure may represent one or more devices and/or other machine-readable storage media for storing information. The term "machine readable storage medium" may include, but be not limited to, a radio channel and various other media capable of storing, containing, and/or carrying instructions and/or data.

Some embodiments of the present disclosure provide a computer program product containing instructions, and the computer program product, upon being executed on a computer, enables the computer to perform the data transmission method as described in any embodiment of the above-mentioned embodiments.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined by the protection scope of the claims.

## Claims

1. A data transmission method, **characterized in that** the method is applied to a first node, and comprises:
sending a first message to a second node, wherein the first message is used to request transmission of first type of data;
receiving a second message sent from the second node in response to the first message; and
performing transmission of the first type of data with the second node based on the second message; wherein one of the first node and the second node is a transmission starting point of the first type of data, and the other of the first node and the second node is a transmission termination point of the first type of data.

2. The method according to claim 1, wherein one of the first node and the second node is a base station, and the other of the first node and the second node is a terminal.

3. The method according to claim 1, wherein the first type of data comprises at least one of: data generated and/or used by artificial intelligence (AI), or sensing data.

4. The method according to claim 1, wherein the first message comprises at least one of: a size of data amount or a data type.

5. The method according to claim 1, wherein the first message is indicated via at least one of a radio resource control (RRC) signaling, a medium access control control element (MAC CE), or downlink control information (DCI).

6. The method according to claim 1, wherein the second message is indicated via at least one of an RRC signaling, an MAC CE, or DCI.

7. The method according to claim 1, wherein performing transmission of the first type of data with the second node comprises:
performing transmission of the first type of data with the second node via a radio bearer between the first node and the second node.

8. The method according to claim 7, wherein the radio bearer is a dedicated radio bearer for the first type of data.

9. The method according to claim 7, wherein the radio bearer is a data radio bearer (DRB) or a signaling radio bearer (SRB).

10. The method according to claim 9, wherein in a case where a data amount of the first type of data is greater than a threshold value, the radio bearer is a DRB; or in a case where a data amount of the first type of data is less than or equal to the threshold value, the radio bearer is an SRB.

11. The method according to claim 7, wherein before sending the first message to the second node, the method further comprises:
establishing a radio bearer with the second node.

12. The method according to claim 7, wherein the second message comprises configuration information of the radio bearer.

13. The method according to claim 1, wherein protocol stacks of the first node and the second node comprise a first functional layer for generating and/or processing the first type of data, a second functional layer for generating and/or processing second type of data, a physical layer shared by the first functional layer and the second functional layer, and a data link layer shared by the first functional layer and the second functional layer; and the second type of data is conventional communication data.

14. The method according to claim 1, wherein the first node and the second node possess a first protocol stack for the first type of data and a second protocol stack for second type of data, the first protocol stack comprises a first functional layer, a first data link layer and a first physical layer, and the second protocol stack comprises a second functional layer, a second data link layer and a second physical layer; and the second type of data is conventional communication data.

15. The method according to claim 13 or 14, wherein the first functional layer is a user plane functional layer; a function of the user plane functional layer comprises at least one of: data collection, data transmission, or data processing.

16. The method according to claim 13 or 14, wherein the first functional layer is a control plane functional layer; a function of the control plane functional layer comprises at least one of: connection control, parameter configuration, model training, or model inference.

17. The method according to claim 13 or 14, wherein a packet header of the first type of data comprises indication information for indicating that the first type of data is transmitted to the first functional layer or the second functional layer; and the indication information is indicated by at least one of a preset identifier or an address of the transmission termination point.

18. The method according to claim 14, wherein the first type of data is transmitted via a radio bearer, and configuration information of the radio bearer comprises indication information for indicating respective protocol layers used by the radio bearer.

19. The method according to claim 1, wherein protocol stacks of the first node and the second node possess a third functional layer, a third physical layer, and a third data link layer for generating and/or processing the first type of data and the second type of data; and the second type of data is conventional communication data.

20. The method according to claim 1, further comprising:
receiving a third message sent from the second node, wherein the third message is used to indicate that transmission of the first type of data is completed.

21. The method according to claim 20, further comprising:
releasing the radio bearer used for transmitting the first type of data based on the third message.

22. The method according to claim 20, wherein the third message is indicated via at least one of an RRC signaling, an MAC CE, or DCI.

23. A data transmission method, **characterized in that** the method is applied to a second node, and comprises:
receiving a first message sent from a first node, wherein the first message is used to request transmission of first type of data;
sending a second message to the first node in response to the first message; and
performing transmission of the first type of data with the first node based on the second message; wherein one of the first node and the second node is a transmission starting point for the first type of data, and the other of the first node and the second node is a transmission termination point for the first type of data.

24. The method according to claim 23, wherein one of the first node and the second node is a base station, and the other of the first node and the second node is a terminal.

25. The method according to claim 23, wherein the first type of data comprises at least one of: data generated and/or used by artificial intelligence (AI), or sensing data.

26. The method according to claim 23, wherein the first message comprises at least one of: a size of data amount or a data type.

27. The method according to claim 23, wherein the first message is indicated via at least one of a radio resource control (RRC) signaling, a media access control control element (MAC CE), or downlink control information (DCI).

28. The method according to claim 23, wherein the second message is indicated via at least one of an RRC signaling, an MAC CE, or DCI.

29. The method according to claim 23, wherein performing the transmission of the first type of data with the first node comprises:
performing transmission of the first type of data with the second node via a radio bearer between the first node and the second node.

30. The method according to claim 29, wherein the radio bearer is a dedicated radio bearer of the first type of data.

31. The method according to claim 29, wherein the radio bearer is a data radio bearer (DRB) or a signaling radio bearer (SRB).

32. The method according to claim 31, wherein in a case where a data amount of the first type of data is greater than a threshold value, the radio bearer is a DRB; or, in a case where the data amount of the first type of data is less than or equal to the threshold value, the radio bearer is an SRB.

33. The method according to claim 29, wherein before receiving the first message sent from the first node, the method further comprises:
establishing a radio bearer with the first node.

34. The method according to claim 29, wherein the second message comprises configuration information of the radio bearer.

35. The method according to claim 23, wherein protocol stacks of the first node and the second node comprises a first functional layer for generating and/or processing the first type of data, a second functional layer for generating and/or processing second type of data, a physical layer shared by the first functional layer and the second functional layer, and a data link layer shared by the first functional layer and the second functional layer; and the second type of data is conventional communication data.

36. The method according to claim 23, wherein the first node and the second node possess a first protocol stack for the first type of data and a second protocol stack for the second type of data, the first protocol stack comprises a first functional layer, a first data link layer and a first physical layer, and the second protocol stack comprises a second functional layer, a second data link layer and a second physical layer; and the second type of data is conventional communication data.

37. The method according to claim 35 or 36, wherein the first functional layer is a user plane functional layer; a function of the user plane functional layer comprises at least one of: data collection, data transmission, or data processing.

38. The method according to claim 35 or 36, wherein the first functional layer is a control plane functional layer; a function of the control plane functional layer comprises at least one of: connection control, parameter configuration, model training, or model inference.

39. The method according to claim 35 or 36, wherein a packet header of the first type of data comprises indication information for indicating that the first type of data is transmitted to the first functional layer or the second functional layer; and the indication information is indicated by at least one of a preset identifier or an address of the transmission termination point.

40. The method according to claim 36, wherein the first type of data is transmitted via a radio bearer, and configuration information of the radio bearer comprises indication information for indicating respective protocol layers used by the radio bearer.

41. The method according to claim 23, wherein protocol stacks of the first node and the second node possess a third functional layer, a third physical layer, and a third data link layer for generating and/or processing the first type of data and the second type of data; and the second type of data is conventional communication data.

42. The method according to claim 23, further comprising:
sending a third message to the first node, wherein the third message is used to indicate that the transmission of the first type of data is completed.

43. The method according to claim 42, further comprising:
releasing the radio bearer used for transmitting the first type of data based on the third message.

44. The method according to claim 42, wherein the third message is indicated via at least one of an RRC signaling, an MAC CE, or DCI.

45. A data transmission method, wherein the method is applied to a first node, and comprises:
sending a first message to a second node, wherein the first message is used to request transmission of first type of data;
receiving a second message sent from the second node in response to the first message, wherein the second message comprises address information of a target node; and
performing transmission of the first type of data with the target node based on the address information of the target node; wherein one of the first node and the target node is a starting point of the transmission of the first type of data, and the other of the first node and the target node is a transmission termination point of the first type of data.

46. The method according to claim 45, wherein the first node and the second node are two different nodes among a terminal, a radio access network (RAN) network element, a core network (CN) network element, and a server.

47. The method according to claim 45, wherein the target node is any one of a terminal, a RAN network element, a CN network element, and a server; and a node type of the target node is different from a node type of the first node.

48. The method according to claim 45, wherein the target node is the second node; or the target node is another node different from the second node.

49. The method according to claim 45, wherein performing the transmission of the first type of data with the target node based on the address information of the target node comprises:
sending a fourth message to the target node based on the address information of the target node, wherein the fourth message is used to request establishment of a session for transmitting the first type of data;
receiving a fifth message sent from the target node, wherein the fifth message is used to represent that establishment of the session is completed; and
performing transmission of the first type of data with the target node through the session.

50. The method according to claim 45, wherein the first type of data comprises at least one of: data generated and/or used by artificial intelligence (AI), or sensing data.

51. The method according to claim 45, wherein the first message comprises at least one of: a size of data amount or a data type.

52. The method according to claim 45, wherein the first message is indicated via at least one of a radio resource control (RRC) signaling, a media access control control element (MAC CE), or downlink control information (DCI).

53. The method according to claim 45, wherein the second message is indicated via at least one of an RRC signaling, an MAC CE, or DCI.

54. The method according to claim 49, wherein the fourth message is indicated via at least one of an RRC signaling, an MAC CE, or DCI.

55. The method according to claim 49, wherein the fifth message is indicated via at least one of an RRC signaling, an MAC CE, or DCI.

56. A data transmission method, wherein the method is applied to a second node, and comprises:
receiving a first message sent from a first node, wherein the first message is used to request transmission of first type of data; and
sending a second message to the first node in response to the first message; wherein the second message comprises address information of a target node; wherein one of the first node and the target node is a transmission starting point of the first type of data, and the other of the first node and the target node is a transmission termination point of the first type of data.

57. The method according to claim 56, wherein the first node and the second node are two different nodes among a terminal, a radio access network (RAN) network element, a core network (CN) network element, and a server.

58. The method according to claim 56, wherein the target node is any one of a terminal, a RAN network element, a CN network element, and a server; and a node type of the target node is different from a node type of the first node.

59. The method according to claim 56, wherein the first type of data comprises at least one of: data generated and/or used by artificial intelligence (AI), or sensing data.

60. The method according to claim 56, wherein the first message comprises at least one of: a size of data amount or a data type.

61. The method according to claim 56, wherein the first message is indicated via at least one of a radio resource control (RRC) signaling, a media access control control element (MAC CE), or downlink control information (DCI).

62. The method according to claim 56, wherein the second message is indicated via at least one of an RRC signaling, an MAC CE, or DCI.

63. A data transmission method, wherein the method is applied to a target node, and comprises:
receiving a fourth message sent from a first node, wherein the fourth message is used to request establishment of a session for transmitting first type of data;
sending a fifth message to the first node, wherein the fifth message is used to indicate that establishment of the session is completed; and
performing transmission of the first type of data with the first node through the session; wherein one of the first node and the target node is a transmission starting point for the first type of data, and the other of the first node and the target node is a transmission termination point for the first type of data.

64. The method according to claim 63, wherein the first node and the second node are two different nodes among a terminal, a radio access network (RAN) network element, a core network (CN) network element, and a server.

65. The method according to claim 63, wherein the target node is any one of a terminal, a RAN network element, a CN network element, and a server; and a node type of the target node is different from a node type of the first node.

66. The method according to claim 63, wherein the first type of data comprises at least one of: data generated and/or used by artificial intelligence (AI), or sensing data.

67. The method according to claim 63, wherein the fourth message is indicated via at least one of a radio resource control (RRC) signaling, a media access control control element (MAC CE), or downlink control information (DCI).

68. The method according to claim 63, wherein the fifth message is indicated via at least one of an RRC signaling, an MAC CE, or DCI.

69. A communication apparatus, **characterized by** comprising: a processor and a memory for storing instructions executable for the processor;
the processor is configured to execute the instructions, so that the communication apparatus performs the data transmission method according to any one of claims 1 to 68.

70. A computer readable storage medium, **characterized in that** the computer readable storage medium has stored computer instructions thereon, and the computer instructions, upon being executed on a computer, enable the computer to perform the data transmission method according to any one of claims 1 to 68.
